# EUROPÄISCHE PATENTSCHRIFT

(11) **EP 3 771 384 B1**
(45) Veröffentlichungstag und Bekanntmachung des Hinweises auf die Patenterteilung: **26.04.2023**
(21) Anmeldenummer: 20185028.6
(22) Anmeldetag: 09.07.2020
(51) Int. Cl.: A47J 43/07, G05G 5/08, G05G 5/02

(54) **ELEKTROMOTORISCHES KÜCHENGERÄT UND VERFAHREN**
KITCHEN APPLIANCE WITH ELECTRIC MOTOR AND METHOD
APPAREIL DE CUISINE À MOTEUR ÉLECTRIQUE ET PROCÉDÉ

(30) Priorität: 30.07.2019 DE 102019211299
(43) Veröffentlichungstag der Anmeldung: 03.02.2021
(73) Patentinhaber: BSH Hausgeräte GmbH, 81739 München (DE)
(72) Erfinder: Krüger, Tobias, 80639 München (DE); Leng, Sascha, 80339 München (DE); Bürzle, Sonja, 89257 Illertissen (DE)

(56) Entgegenhaltungen:
- EP-B1- 2 335 533
- WO-A1-2013/038360
- CN-A- 101 916 675
- CN-U- 207 768 235
- US-A1- 2003 141 765

## Beschreibung

Die Erfindung betrifft ein Küchengerät nach dem Oberbegriff des Patentanspruchs 1 und ein Verfahren zum Betreiben des Küchengeräts.

Bekannte elektromotorische Küchengeräte zum Verarbeiten von Lebensmittel haben einen Schalter zum Ein- und Ausschalten des Elektromotors, sowie häufig eine Einstelleinrichtung wie ein Drehrad zum Einstellen einer Drehgeschwindigkeit eines mit dem Elektromotor in Wirkverbindung stehenden Werkzeugs. Beispielhafte Werkzeuge sind Schneebesen und Schneidmesser. In jüngster Zeit ist, beispielsweise bei Haushaltsküchenkleingeräten wie Stabmixern, die Tendenz zu beobachten, dass der Schalter und die Einstelleinrichtung eine Einheit bilden, so dass die Leistung des Drehmotors und insbesondere die Drehgeschwindigkeit des Werkzeugs in Abhängigkeit von einer Betätigungsintensität des Schalters gesteuert wird. Um bei Küchengeräten mit einer derartigen SmartSpeed-Funktion eine versehentliche Betätigung des jeweiligen Küchengeräts zu vermeiden, haben diese gewöhnlich eine von der Schalter-Einstelleinrichtungseinheit örtlich getrennte Sicherungseinrichtung, die den Schalter solange sperrt, bis sie von einem Anwender in ihre Freigabestellung überführt worden ist. Die örtliche Trennung erschwert bzw. macht die Einhandbedienung nahezu unmöglich.

Druckschriftlicher Stand der Technik ist aus der EP 2 335 533 B1, der CN 101 916 675 A und aus der WO 2013/038360 A1 bekannt.

Aufgabe der Erfindung ist es, ein bedienerfreundliches Küchengerät, das die bequeme Einhandbedienung ermöglicht, und ein Verfahren zum Bedienen des Küchengerätes zu schaffen.

Diese Aufgabe wird gelöst durch ein Küchengerät mit den Merkmalen des Patentanspruchs 1 und durch ein Verfahren mit den Merkmalen des Patentanspruchs 6.

Ein erfindungsgemäßes Küchengerät zum Verarbeiten von Lebensmittel hat einen Elektromotor zum Antreiben eines Werkzeugs des Küchengeräts und einen Schalter zum Ein- und Ausschalten des Elektromotors. Zudem hat das Küchengerät eine Steuer- und Regeleinheit, die derart eingerichtet ist, dass eine Drehgeschwindigkeit des mit dem Elektromotor in Wirkverbindung stehenden Werkzeugs in Abhängigkeit von einer Betätigungsintensität eines manuellen Betätigungselements des Schalters eingestellt wird. Des Weiteren hat das Küchengerät eine Sicherungseinrichtung zum Verhindern einer versehentlichen Betätigung des Schalters. Erfindungsgemäß hat die Sicherungseinrichtung ein manuelles Sicherungselement, das zum Freigeben des Betätigungselements in die gleiche Richtung wie das Betätigungselement zu bewegen ist, wobei das Sicherungselement in seiner Sperrstellung über eine Betätigungsfläche des Betätigungselements hervorsteht. Das Sicherungselement schließt in einer Freigabestellung bündig bzw. nahezu bündig mit der Betätigungsfläche ab. Durch diese Maßnahme wird sichergestellt, dass das Sicherungselement ausschließlich zur Freigabe des Schalters verwendet wird, das Ein- und Ausschalten des Elektromotors aber über das Betätigungselements des Schalters erfolgt. Weiterhin wird durch das bündige bzw. nahezu bündige Abschließen erreicht, dass das Sicherungselement in seiner Freigabestellung vollständig in das Betätigungselement eintaucht und in seiner Freigabestellung zumindest nicht wesentlich über die Betätigungsfläche hervorsteht, wodurch der Bedienkomfort und insbesondere die Haptik weiter verbessert wird.

Das erfindungsgemäße Küchengerät verfügt über die sogenannte SmartSpeed-Funktion, wobei dadurch, dass das Sicherungselement nahe und/oder in das Betätigungselement quasi integriert ist, eine bequeme Einhandbedienung des Küchengeräts, beispielsweise ein Haushaltsküchenkleingerät wie ein Stabmixer, ermöglicht wird. Eine Entsperrung des Schalters erfolgt automatisch und somit unmittelbar, da das Sicherungselement quasi in das Betätigungselement übergeht. Es erfolgt eine wesentliche intuitivere und ergonomischere Bedienung als bei den elektromotorischen Küchengeräten mit SmartSpeed-Funktion nach dem Stand der Technik. Ferner ermöglicht die Erfindung wesentlich mehr Freiheitsgrade in der Gestaltung des Sicherungselements.

Bei einer bevorzugten Ausführungsform ist der Schalter ein in seine Ruheposition federvorgespannter Druckschalter. Hierdurch steht der Schalter bzw. dessen Bedienelement über angrenzende Gehäuseabschnitte hervor, wobei über die Höhe des Bedienelements bzw. der Abstand von dessen Bedienfläche zu den angrenzenden Gehäuseabschnitten die Sichtbarkeit des Schalters erhöht wird. Zudem ist ein Druckschalter auch bei feuchter Betätigungsfläche oder mit Handschuhen sicher zu bedienen. Bevorzugterweise verläuft die Betätigungsrichtung und seine Bewegungsrichtung senkrecht zur Motorachse bzw. zu Werkzeuglängsachse. Alternativ kann der Schalter auch als ein Schiebeschalter ausgebildet sein, der entlang des Gehäuses verschoben wird.

Eine vorrichtungstechnisch einfache Ausbildung sieht vor, das Sicherungselement als einen Stift auszubilden, der in Richtung seiner Sperrstellung federvorgespannt ist. Die Sicherungseinrichtung ist somit quasi auch als ein Druckschalter ausgebildet.

Der Bedienkomfort lässt sich weiter steigern, wenn die Betätigungsfläche und das Sicherungselement im Bereich einer Fingermulde des Betätigungselements angeordnet sind. Durch diese Maßnahme wird dem Bediener zweifelfrei haptisch rückgemeldet, ob er sich mit seinem Finger an der richtigen Stelle befindet, was der sicheren Verwendung des Küchengeräts dienlich ist. Eine Sichtkontrolle entfällt. Das Küchengerät lässt sich somit mit nur einem Finger entsperren und betätigen. Selbstverständlich kann die Fingermulde aber auch so ausgebildet sein, dass sie mehrere Finger aufnehmen kann, so dass das Küchengerät mit mehreren Fingern entsperrt und betätigt werden kann.

Aus Sicherheitsgründen ist es vorteilhaft, wenn die Fingermulde derart ausgebildet ist und das Sicherungselement in seiner Sperrstellung derart in die Fingermulde eintaucht, dass ein Körper, beispielsweise eine sogenannte Normkugel, den Schalter nicht entsperren kann. Der Körper hat mindestens einen Außendurchmesser von 4 cm. Durch diese Maßnahme wird die Sicherheit erhöht, da beim versehentlichen Ablegen des Küchengeräts auf dem Betätigungselement der Schalter nicht entsperrt und somit der Elektromotor nicht aktiviert wird.

Bei einem erfindungsgemäßen Verfahren zum Aktivieren eines Elektromotors eines Küchengeräts, wird zuerst ein Sicherungselement aus seiner Sperrstellung in eine Freigabestellung überführt. Beim Erreichen der Freigabestellung wird ein Betätigungselement eines Schalters aus seiner Ruheposition in einen Arbeitsbereich überführt, wobei beim Überführen des Betätigungselementes in seinen Arbeitsbereich das Sicherungselement mitgeführt wird.

Das erfindungsgemäße Verfahren ermöglicht ein Entsperren und eine Aktivierung des Elektromotors in Einhandbedienung des Küchengeräts, da zum einen das Sicherungselement und das Betätigungselement in unmittelbarer Nähe zueinander angeordnet sind bzw. das Sicherungselement in dem Betätigungselement geführt ist. Zum anderen überlagern sich die Bewegungsrichtung des Sicherungselements und des Betätigungselements.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand der anliegenden stark vereinfachten Figuren erläutert. Es zeigen:
- Figur 1: eine perspektivische Draufsicht auf einen Griffbereich eines erfindungsgemäßen Küchengeräts, und
- Figur 2: einen Schnitt durch den Griffbereich im Schalterbereich mit skizzierter Normkugel.

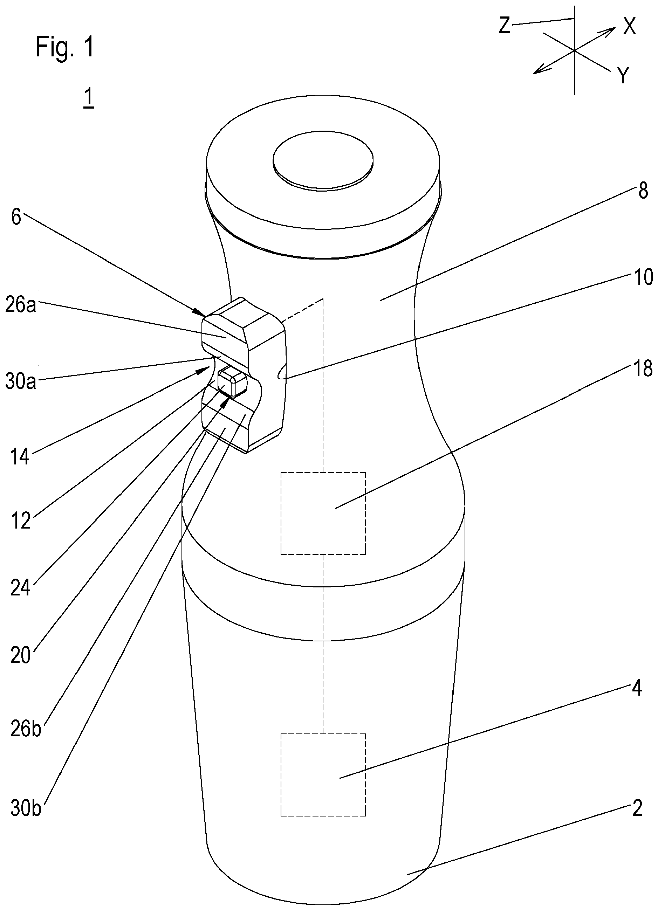

In Figur 1 ist ein Griffbereich 1 eines erfindungsgemäßen elektrisch betriebenen Haushaltskleingeräts bzw. Küchengerätes gezeigt. Der Betrieb des Küchengeräts erfolgt entweder kabelgebunden oder kabellos mittels eines Stromspeichers. Das Küchengerät ist hier ein Stabmixer mit einer nicht dargestellten Aufnahme am in der gezeigten Ausrichtung gemäß Figur 1 unteren Ende 2 des Griffbereichs 1 zum Einsetzen eines Werkzeugs wie ein Schneebesen oder ein Schneidmesser. Im Betrieb rotiert das Werkzeug um eine Hochachse z des Küchengerätes, die sich gemäß der Ansicht von oben nach unten erstreckt. Der Antrieb des Werkzeugs erfolgt über einen im Inneren des Griffbereichs 1 angedeuteten Elektromotor 4.

Zur Betätigung des Elektromotors 4 ist ein Schalter ausgebildet, dessen manuell betätigbares Betätigungselement 6 gemäß der Ausrichtung in Figur 1 nahe eines oberen Endes des Griffbereichs 1 angeordnet ist. In dem hier gezeigten Ausführungsbeispiel ist das Betätigungselement 6 in einer bezogen auf die Hochachse z radialen Verjüngung 8 des Griffbereichs 1 angeordnet, wodurch ein Halten des Küchengeräts im Betrieb verbessert wird.

Der Schalter ist hier als Druckschalter ausgebildet, dessen Betätigungselement 6 sich durch eine Gehäuseöffnung 10 des Griffbereichs senkrecht zur Hochachse z des Stabmixers erstreckt und durch eine entsprechende Druckbewegung senkrecht zur Hochachse z in den Griffbereich 1 mehr oder weniger eintaucht. Das Betätigungselement 6 hat somit zwei entgegengesetzte lineare Bewegungsrichtungen x, angedeutet durch den Doppelpfeil. Die eine Bewegungsrichtung ist radial auf die Hochachse z gerichtet (Steigerung der Drehzahl bzw. der Motorleistung) und die andere Bewegungsrichtung ist radial weg von der Hochachse z (Gegenrichtung, Reduzierung der Drehzahl bzw. der Motorleistung) gerichtet. Die Hochachse z ist gleich der Motorachse und somit gleich der Werkzeugachse.

Das Betätigungselement 6 hat eine kubusartige Gestalt mit einer größeren Erstreckung entlang der Hochachse z des Stabmixers als quer zu dieser bzw. in Querrichtung y. Es hat eine Betätigungsfläche 12, die sich im Wesentlichen tangential zu einem gedachten Zylindermantel erstreckt, der drehsymmetrisch zur Hochachse z verläuft. Die Betätigungsfläche 12 bildet eine Fingermulde 14, die sich quer zu den Bewegungsrichtungen x und bei der gezeigten senkrechten Ausrichtung des Küchengeräts waagerecht erstreckt. Sie durchsetzt das Betätigungselement 6 in Querrichtung y vollständig und dient zur Aufnahme eines Fingers des jeweiligen Bedieners zum Betätigen des Schalters. In dem hier gezeigten Ausführungsbeispiel hat die Fingermulde 14 eine einheitliche Gestalt über ihre gesamte Erstreckung in Querrichtung y des Betätigungselements 6. Selbstverständlich kann das Betätigungselement 6 auch halbschalenartig bzw. konvex, quadratisch und dergleichen sein.

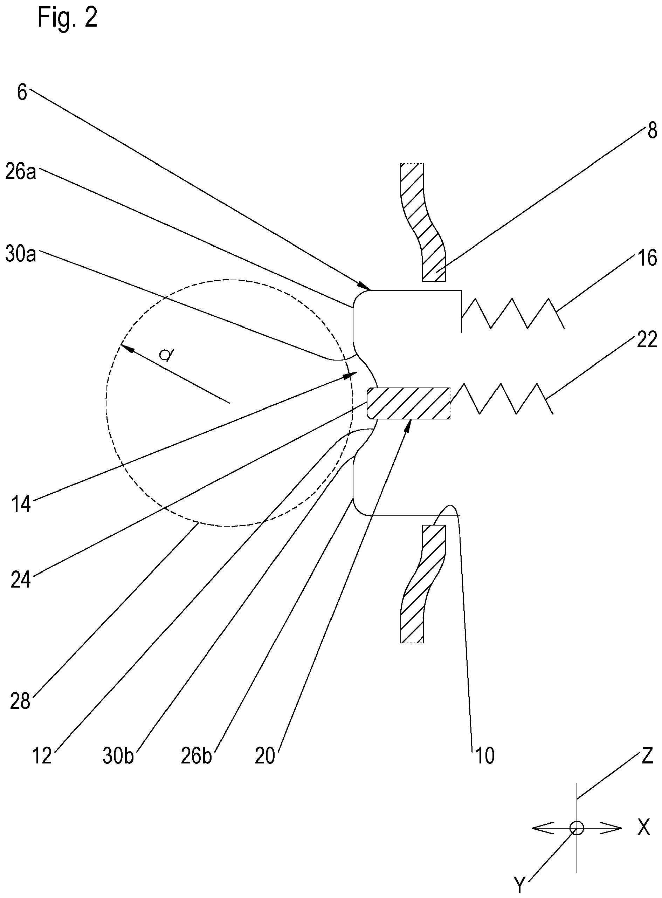

Das Betätigungselement 6 ist in seiner Ruheposition - Elektromotor aus - über eine in Figur 2 skizzierte Feder 16 federvorgespannt. Es wirkt auf eine Steuer- und Regeleinrichtung 18 im Inneren des Griffbereichs 1, die derart eingerichtet ist, dass die Drehgeschwindigkeit des mit dem Elektromotor 4 in Wirkverbindung stehenden Werkzeugs bzw. die Leistung des Elektromotors 4 in Abhängigkeit von einer Betätigungsintensität, hier Eintauchtiefe entlang den Bewegungsrichtungen x, des manuellen Betätigungselements 6 des Schalters eingestellt wird. Das Küchengerät verfügt somit über eine sogenannte SmartSpeed-Funktion. Bei einer geringen Eintauchtiefe des Betätigungselements 6 ist eine kleine Drehzahl eingestellt, wobei bei einer großen Eintauchtiefe eine hohe Drehzahl des Elektromotors 6 eingestellt ist. Der Elektromotor 4 hat somit einen stufenlosen Arbeitsbereich, der über den Schalter bzw. die Eintauchtiefe des Betätigungselements 6 eingestellt wird.

Um ein unbeabsichtigtes Betätigen des Schalters und somit um eine versehentliche Aktivierung des Elektromotors 4 zu verhindern, verfügt das Küchengerät im Griffbereich über eine Sicherungseinrichtung zur Freigabe des Betätigungselements aus seiner Ruheposition bzw. seiner Motor-Aus-Position.

Die Sicherungseinrichtung hat ein manuell betätigbares Sicherungselement 20, das das Betätigungselement 6 im Bereich seiner Betätigungsfläche und somit im Bereich seiner Fingermulde 14 durchsetzt. Es ist hier als ein Stift ausgeführt, der die gleiche Bewegungsrichtungen x senkrecht zur Hochachse z wie das Betätigungselement 6 aufweist. Es ist in seiner Sperrstellung über eine Feder 22 vorgespannt (Figur 2) und somit ebenfalls ein Druckelement. Es hat eine plane bzw. nahezu Kopffläche 24, mit der es in seiner Sperrstellung über die Betätigungsfläche 12 versteht. In seiner Freigabestellung schließt das Sicherungselement 20 mit seiner Kopffläche 24 bündig bzw. nahezu bündig mit der Betätigungsfläche 12 und insbesondere mit einem Grund der Fingermulde 14 ab.

Bei einem erfindungsgemäßen Verfahren zum Aktivieren des Elektromotors 4 des Küchengeräts wird zuerst das Sicherungselement 20 durch eine Druckbewegung in Richtung der Hochachse z aus seiner Sperrstellung in eine Freigabestellung überführt. Anschließend wird beim Erreichen der Freigabestellung des Sicherungselements 20 das Betätigungselement 6 des Schalters aus seiner Ruheposition in seinen Arbeitsbereich überführt, wobei beim Überführen des Betätigungselementes 6 in seinen Arbeitsbereich das Sicherungselement 20 mitgeführt wird. Das Mitführen des Sicherungselements 20 erfolgt dadurch, dass der Bediener beim Hineindrücken des Sicherungselements 20 mit seinem Finger auf die Betätigungsfläche 12 des Betätigungselements 6 aufläuft und dann beim Weiterdrücken das nun freigegebene Betätigungselement 6 hineingedrückt.

Gemäß der Darstellung in Figur 2 ist die Fingermulde 14 derart ausgebildet und das Sicherungselement 20 ist derart in der Fingermulde 12 positioniert, dass das Sicherungselement 20 mit seiner Kopffläche 14 in seiner Sperrstellung soweit gegenüber Außenflächen 26a, 26b des Betätigungselements 6, die an die Fingermulde 14 angrenzen, zurückgesetzt ist, dass es vom einem hier als Normkugel ausgeführten Körper mit einem Außendurchmesser d ≥ 4 cm beim Anliegen an Übergangsradien 30a, 30b der Außenflächen 26a, 26b in die Fingermulde 14 nicht berührt wird bzw. nicht soweit hineingedrückt wird, dass das Betätigungselement 6 freigegeben wird.

Offenbart sind ein elektromotorisches Haushaltsküchenkleingerät mit einer Werkzeugaufnahme zum Verarbeiten von Lebensmittel mit Smartspeed-Funktion, wobei ein manuell betätigbares Sicherungselement einer Sicherungseinrichtung zum Entsperren eines Ein-Ausschalters des Küchengeräts in die gleiche Richtung wie ein manuell betätigbares Betätigungselements des Ein-Ausschalters zu bewegen ist, wobei das Sicherungselement in seiner Sperrstellung über eine Betätigungsfläche des Schalters hervorsteht, sowie ein Verfahren zum Aktivieren eines elektromotorischen Haushaltsküchenkleingeräts.

### Bezugszeichenliste

- 1: Griffbereich
- 2: unteres Ende
- 4: Elektromotor
- 6: Betätigungselement
- 8: Verjüngung
- 10: Gehäuseöffnung
- 12: Betätigungsfläche
- 14: Fingermulde
- 16: Feder Betätigungselement
- 18: Steuer- und Regeleinrichtung
- 20: Sicherungselement
- 22: Feder (Sicherungselement)
- 24: Kopffläche
- 26a, b: Außenfläche
- 28: Normkugel
- 30a, b: Übergangsradius

- d: Durchmesser Normkugel
- x: Bewegungsrichtungen
- y: Querrichtung
- z: Hochachse

## Patentansprüche

1. Küchengerät zum Verarbeiten von Lebensmittel, mit einem Elektromotor (4) zum Antreiben eines Werkzeugs des Küchengeräts, mit einem Schalter zum Ein- und Ausschalten des Elektromotors (4) und mit einer Steuer und Regeleinheit(18), die derart eingerichtet ist, dass eine Drehgeschwindigkeit des mit dem Elektromotor (4) in Wirkverbindung stehenden Werkzeugs in Abhängigkeit von einer Betätigungsintensität eines manuellen Betätigungselements (6) des Schalters eingestellt wird, und mit einer Sicherungseinrichtung zum Verhindern einer versehentlichen Betätigung des Schalters, wobei die Sicherungseinrichtung ein manuelles Sicherungselement (20) aufweist, das zum Freigeben des Betätigungselements (6) in die gleiche Richtung wie das Betätigungselement (6) zu bewegen ist, wobei das Sicherungselement (6) in seiner Sperrstellung über eine Betätigungsfläche (12) des Betätigungselements (6) hervorsteht, wobei das Sicherungselement (20) in einer Freigabestellung bündig bzw. nahezu bündig mit der Betätigungsfläche (12) abschließt..

2. Küchengerät nach Patentanspruch 1, wobei der Schalter ein in seine Ruheposition federvorgespannter Druckschalter ist.

3. Küchengerät nach Patentanspruch 1 oder 2, wobei das Sicherungselement (6) ein Stift ist, der in Richtung seiner Sperrstellung federvorgespannt ist.

4. Küchengerät nach einem der vorhergehenden Patentansprüche, wobei die Betätigungsfläche (12) und das Sicherungselement (20) im Bereich einer Fingermulde (14) des Betätigungselements angeordnet sind.

5. Küchengerät nach Patentanspruch 4, wobei das Sicherungselement (20) in seiner Sperrstellung derart in der Fingermulde (14) angeordnet ist, dass ein Körper (8) mit einem Durchmesser von d ≥ 4 cm es nicht in seine Freigabestellung überführt.

6. Verfahren zum Aktivieren eines Elektromotors (4) eines Küchengeräts nach einem der Patentansprüche 1 bis 5, wobei zuerst ein Sicherungselement aus seiner Sperrstellung in eine Freigabestellung überführt wird und beim Erreichen der Freigabestellung ein Betätigungselement (6) eines Schalters aus seiner Ruheposition in einen Arbeitsbereich überführt wird, wobei beim Überführen des Betätigungselementes (6) in seinen Arbeitsbereich das Sicherungselement (20) mitgeführt wird.

## Claims

1. Kitchen appliance for processing food, with an electric motor (4) for driving a tool of the kitchen appliance, with a switch for switching the electric motor (4) on and off and with a control and regulation unit (18), which is configured in such a manner that a rotary speed of the tool actively connected to the electric motor (4) is set as a function of an actuating intensity of a manual actuation element (6) of the switch, and with a safety facility for preventing an accidental actuation of the switch, wherein the safety facility has a manual safety element (20), which is to be moved in the same direction as the actuation element (6) in order to release the actuation element (6), wherein the safety element (6), in its locked position, protrudes over an actuation area (12) of the actuation element (6), wherein the safety element (20), in its released position, terminates flush or almost flush with the actuation area (12).

2. Kitchen appliance according to claim 1, wherein the switch is a pressure switch that is spring-pretensioned in its resting position.

3. Kitchen appliance according to claim 1 or 2, wherein the safety element (6) is a pin, which is spring-pretensioned in the direction of its locked position.

4. Kitchen appliance according to one of the preceding claims, wherein the actuation area (12) and the safety element (20) are arranged in the region of a finger recess (14) of the actuation element.

5. Kitchen appliance according to claim 4, wherein the safety element (20), in its locked position, is arranged in the finger recess (14) in such a manner that a body (8) with a diameter of d ≥ 4 cm does not transfer it into its released position.

6. Method for activating an electric motor (4) of a kitchen appliance according to one of claims 1 to 5, wherein first a safety element is transferred from its locked position into a released position, and when the released position is reached an actuation element (6) of a switch is transferred from its resting position into an operating region, wherein the safety element (20) is guided along when the actuation element (6) is transferred into its operating region.

## Revendications

1. Appareil ménager pour le traitement de produits alimentaires, avec un moteur électrique (4) pour entraîner un outil de l'appareil ménager, avec un interrupteur pour allumer et éteindre le moteur électrique (4) et avec une unité de commande et de réglage (18) conçue de sorte qu'une vitesse de rotation de l'outil en coopération avec le moteur électrique (4) soit réglée en fonction d'une intensité d'actionnement d'un élément d'actionnement manuel (6) de l'interrupteur, et avec un dispositif de sécurité pour empêcher un actionnement par inadvertance de l'interrupteur, dans lequel le dispositif de sécurité présente un élément de sécurité manuel (20) qu'il faut déplacer dans la même direction que l'élément d'actionnement (6) pour libérer l'élément d'actionnement (6), l'élément d'actionnement (6) dépassant d'une surface d'actionnement (12) de l'élément d'actionnement (6) dans sa position de verrouillage, l'élément de sécurité (20) se raccordant en affleurement ou quasiment en affleurement avec la surface d'actionnement (12) dans une position de libération.

2. Appareil ménager selon la revendication 1, dans lequel l'interrupteur est un boutonpoussoir précontraint par ressort dans sa position de repos.

3. Appareil ménager selon la revendication 1 ou 2, dans lequel l'élément de sécurité (6) est une pointe précontrainte par ressort dans la direction de sa position de verrouillage.

4. Appareil ménager selon l'une des revendications précédentes, dans lequel la surface d'actionnement (12) et l'élément de sécurité (20) sont disposés à proximité d'un creux pour les doigts (14) de l'élément d'actionnement.

5. Appareil ménager selon la revendication 4, dans lequel l'élément de sécurité (20) est disposé dans le creux pour les doigts (14) dans sa position de verrouillage de sorte qu'un corps (8) de diamètre d ≥ 4 cm ne le dépasse pas dans sa position de libération.

6. Procédé d'activation d'un moteur électrique (4) d'un appareil ménager selon l'une des revendications 1 à 5, dans lequel on commence par faire passer un élément de sécurité de sa position de verrouillage à sa position de libération, et quand il atteint la position de libération, un élément d'actionnement (6) d'un interrupteur est transféré de sa position de repos dans une zone d'activité, l'élément de sécurité (20) étant entraîné lors du transfert de l'élément d'actionnement (6) dans sa zone d'activité.
